(19) Europäisches Patentamt
European Patent Office
Office européen des brevets

(11) Publication number: 0 108 472 B1

(12) # EUROPEAN PATENT SPECIFICATION

(45) Date of publication of patent specification: 13.12.89

(51) Int. Cl.$^4$: **C 09 B 1/58,** C 09 K 19/60, G 02 F 1/137

(21) Application number: 83304569.3

(22) Date of filing: 08.08.83

(54) **Organic materials for a liquid crystal device.**

(30) Priority: 18.08.82 GB 8223855

(43) Date of publication of application: 16.05.84 Bulletin 84/20

(45) Publication of the grant of the patent: 13.12.89 Bulletin 89/50

(84) Designated Contracting States: CH DE FR GB IT LI

(56) References cited:
EP-A-0 059 036
EP-A-0 111 197
EP-A-0 142 617
GB-A-2 082 196

(73) Proprietor: The Secretary of State for Defence in Her Britannic Majesty's Government of the United Kingdom of Great Britain and Northern Ireland Whitehall London SW1A 2HB (GB)

(72) Inventor: Harrison, Kenneth John
Pembroke Lodge, Old Church Road
Colwall Malvern Worcestershire WR13 6EZ (GB)
Inventor: Raynes, Edward Peter
23 Leadon Road
Malvern Worcestershire (GB)
Inventor: Saunders, Frances Carolyn
24 Walnut Crescent Fruitlands
Malvern Wells Worcestershire (GB)
Inventor: Thompson, David John
50 Marle Croft Old Hall Park
Whitefield Manchester (GB)

(74) Representative: Beckham, Robert William et al
Procurement Executive Ministry of Defence
Room 2016 Empress State Building Lillie Road
London SW6 1TR (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 108 472 B1

Courier Press, Leamington Spa, England.

## Description

The present invention is concerned with organic materials, in particular with pleochroic dyes in solution with liquid crystal materials, e.g. for electro-optic display applications.

Liquid crystal materials are well known organic materials which display phases, known as liquid crystal phases or mesophases, having a degree of molecular ordering intermediate between that of the fully ordered crystalline solid state and the fully disordered isotropic liquid state.

Electro-optical devices incorporating liquid crystal materials are well known and widely used as digital displays in such applications as watches, calculators and digital voltmeters. These devices utilise the optical contrast when an electric field is applied across a thin insulating film of suitable liquid crystal material. The molecules of the material (in a liquid crystal phase at the temperature of operation) are re-orientated by the field causing a change in an optical property of the part of the film where the field is applied, e.g. a change in ambient light scattering or transmissivity.

Most of the liquid crystal display devices currently used in consumer based applications operate by the twisted nematic electro-optical effect in which the optical activity of a film of nematic liquid crystal material having a twisted molecular configuration is voltage dependent allowing the film to be switched between states of different transmissivity when the film is contained in the form of a cell between optical polarisers. Although devices of this type are ideally suited to applications requiring low voltages and low power consumption they suffer from a number of limitations inherent in their mode of operation. In particular, use of two polarisers is undesirable because they are relatively expensive, difficult to handle, degrade in moisture and create a dull appearance. Furthermore, the optical contrast of twisted nematic devices at wide angles of view is poor.

Liquid crystal materials have the property that their molecules can impose their ordering upon the molecules of other suitable dopant materials incorporated within them. This property is the basis of so-called "guest-host" devices e.g. display devices in which the host liquid crystal material and its guest material have one molecular configuration in the absence of an applied electric field and another molecular configuration when an electric field is applied across the material. The guest material is usually a pleochroic dye, which is a dye whose molecular absorption properties vary with the orientation of the electric vector of light incident upon its molecules.

The presence of such a dye can be used to enhance the contrast between the off state (with no electric field applied) and the on state (with electric field applied) of a liquid crystal display because the orientation of the dye molecules is in effect switchable by the effect of the applied electric field on the liquid crystal molecules and by the consequent re-orientation of the dye molecules by the guest-host effect.

As discussed further below there are several kinds of liquid crystal effects which can make use of the guest-host effect in electro-optical displays. These vary according to the kind of liquid crystal material used and the configuration of its molecules in the off state (e.g. as determined by the surface treatments of the substrates employed to contain the film of liquid crystal material).

Electro-optical displays of the guest-host kind, particularly those which operate by the so-called phase change electro-optical effect, have the advantages that they do not require two polarisers, their optical contrast at wide viewing angles can be improved and they can be formed by depositing a liquid crystal cell directly on an active substrate.

In order to provide maximum contrast between the on and off states of a guest-host liquid crystal display it is important that the guest molecules adopt as closely as possible the time averaged orientation of the host molecules. However this is achieved only to a limited degree because of random thermal fluctuations. The degree to which the orientation varies from the ideal is measured by a quantity known as the order parameter S which is given by the following equation:

$$S = \tfrac{1}{2}(3\cos^2\theta - 1) \qquad \text{Equation (1)}$$

where $\cos^2\theta$ is a time averaged term and $\theta$ is the instantaneous angular orientation of the molecules with respect to the time averaged orientation of the host molecules. The determination of the value of the order parameter S is well understood in the art; see for example the paper "A new absorptive mode reflective liquid crystal display device" by D. L. White and G. N. Taylor in the Journal of Applied Physics, 1974, *45* pages 4718 to 4723.

For perfect orientation the order parameter S is unity (that is $\theta$ is zero). Thus, pleochroic dyes for use in guest-host devices should have an order parameter in the liquid crystal host as high as possible (i.e. less than one but as near to one as possible). However they must also have adequate chemical, photochemical and electrochemical stability, e.g. stability when exposed to atmospheric contaminants, electric fields (as in device operation) and to ultra-violet radiation. They should not be ionic or have any ionisable character (otherwise the liquid crystal material will lose its insulating nature and conduct making the device useless). They must also have sufficient solubility in the host materials; although the concentration of guest pleochroic dye required for the desired effect is generally quite small (e.g. not more than a few per cent of dye) nevertheless many pleochroic dyes are unsuitable because they are essentially insoluble in liquid crystal materials.

EP—A—0 059 036 discloses solutions in the liquid crystal material E43 (for composition of E43 see

later) of the two anthraquinones:

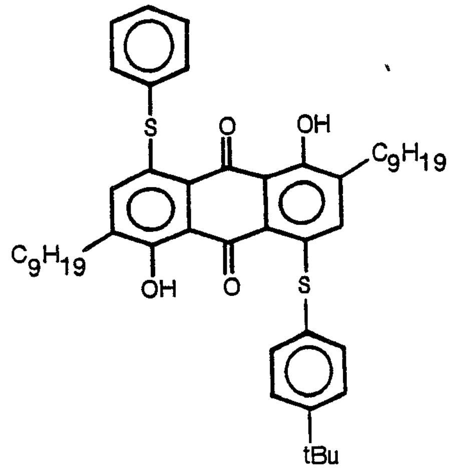

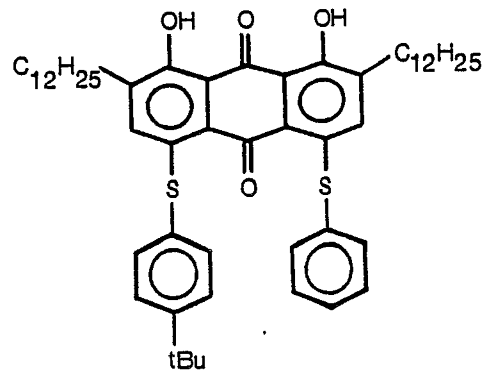

EP—A—0 059 036 has a priority date earlier than that of this application but was published later than the priority date of this application.

According to the present invention a material suitable for a guest-host liquid crystal device comprises a solution of a liquid crystal material and a pleochroic dye wherein the pleochroic dye comprises at least one anthraquinone compound free from water solubilising and ionic substituents and having the formula:

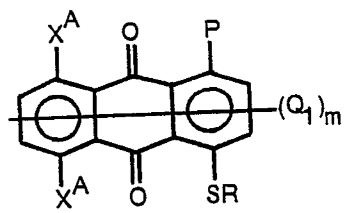

Formula I

wherein:

each group $Q_1$ is independently $C_1$ to $C_{20}$ alkyl;

P is OH or $NH_2$;

m is 1 or 2;

each group $X^A$ is independently selected from OH, $NO_2$, SR and $NZ_1Z_2$, provided that; either

one group $X^A$ is SR and the other group $X^A$ is OH, $NO_2$ or $NZ_1Z_2$ wherein each group R is independently selected from optionally substituted alkyl, aryl and cycloalkyl groups, and each group $Z_1$, $Z_2$ is independently selected from hydrogen, optionally substituted alkyl, aryl and cycloalkyl groups; or

one of the groups $X^A$ is $NZ_2Z_2$ wherein one of $Z_1$ or $Z_2$ is hydrogen and the other is hydrogen or alkyl, and the other group $X^A$ is OH; and

further provided that when m is 2 and at least one of the groups $X^A$ is SR or $NO_2$ and the groups $Q_1$ are identical they are each selected from $C_4$ to $C_7$ alkyl.

Preferably, each alkyl group $Q_1$ has between 4 to 15, more preferably from 4 to 7 carbon atoms inclusive. Preferably each alkyl group $Q_1$ is a straight chained group. Preferably, where m = 2 the two groups $Q_1$ are identical.

Preferably, where one of the groups R is optionally substituted alkyl it contains from 1 to 20 carbon atoms, more preferably 1 to 10 carbon atoms.

Where one of the groups R is aryl it preferably contains up to 15 carbon atoms and is more preferably monocyclic, e.g. optionally substituted phenyl or bicyclic e.g. optionally substituted naphthyl.

Where one of the groups R is optionally substituted cycloalkyl it preferably contains from 4 to 8 carbon atoms in the ring structure.

Preferably, $Z_1$ and $Z_2$ are independently selected from H and $C_1$ to $C_4$ alkyl; in particular it is preferred that one of $Z_1$ and $Z_2$ is H and the other is H or $CH_3$.

The groups R, $Z_1$, $Z_2$ and $Q_1$ in Formula I may optionally carry a non-ionic substituent. Where such a substituent is present on an alkyl group it is preferably $C_{1-10}$ alkoxy, halogeno or monocyclic aryl. Where such a substituent is on an aryl group it is preferably $C_{1-10}$ alkyl, $C_{4-8}$ cycloalkyl or monocyclic aryl.

In Formula I preferably m = 2, P = OH, one of the groups $X^A$ = OH and the other of the groups $X^A$ = SR. The alkyl groups $Q_1$ are preferably adjacent to the OH groups.

The invention also provides a preferred material suitable for a guest-host liquid crystal device comprising a solution of a liquid crystal material and a pleochroic dye characterised in that the pleochroic dye comprises at least one anthraquinone compound free from water solubilising and ionic substituents of the preferred class having the formula:

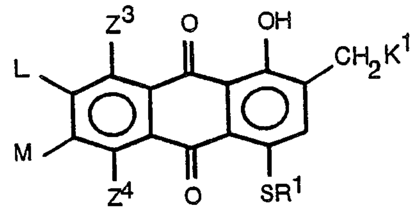

Formula II

wherein:

$Z^4$ is OH, $Z^3$ is NHT or $SR^2$, M is $CH_2K^2$ and L is H; or

$Z^3$ is OH, $Z^4$ is NHT or $SR^2$, L is $CH_2K^2$ and M is H;

$K^1$ and $K^2$ are independently $C_{1-20}$ alkyl;

each of the groups represented by $K^1$ and $K^2$ is independently an alkyl group having from 1 to 20 carbon atoms;

$R^1$ is an aryl group having up to 15 carbon atoms;

$R^2$ is selected from alkyl groups having from 1 to 15 carbon atoms

aryl groups having from up to 15 carbon atoms,

and cycloalkyl groups having from 4 to 8 carbon atoms; T is H or alkyl provided that when one of the groups $Z^3$ or $Z^4$ is $SR^2$, and $CH_2K^1$ and L or M represent identical groups, these alkyl groups each contain from 4 to 7 carbon atoms.

Preferably, dyes of Formula II are of the formula:

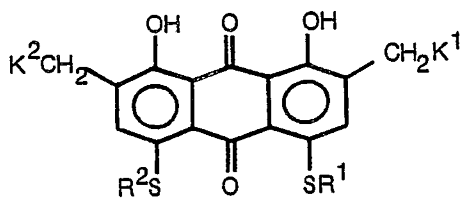

Formula III

Preferably $K^1$ and $K^2$ are identical, have from 6 to 12 carbon atoms, and are n-alkyl groups.

In Formula III the two groups represented by $R^1$ and $R^2$ are preferably monocyclic aryl groups, and desirably one is phenyl and the other is 4-alkylphenyl. Preferably the alkyl group contained in the 4-alkylphenyl group has a branched chain and from 3 to 8 carbon atoms. Preferably this alkyl group is t-butyl.

An especially preferred dye from this class having particularly good solubility and a high order parameter is 1,8-dihydroxy-2,7-di-n-heptyl-4-phenylthio-5-(4-t-butylphenylthio)anthraquinone. Other useful dyes of this class include 1,8-dihydroxy-2,7-di-n-pentyl-4-(t-butylphenylthio)-5-phenylthioanthraquinone, and 1,5-dihydroxy-2,6-di-(2,4,4-trimethyl-n-butyl)-4-phenylthio-8-(4-t-butylphenylthio)anthraquinone.

The compounds of Formula I, and especially the aforementioned preferred classes, are useful for the colouration of liquid crystals for use in guest-host effect applications particularly electronic displays. They have bluish red (purple) shades and generally exhibit high order parameters and/or high solubilities in liquid crystal materials as well as high stabilities.

Examples of some compounds having particularly useful properties are those of Formula T having the substituents listed in Table A as follows:

TABLE A
Compounds of Formula T

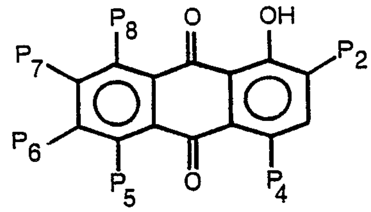

Formula T

| Substituent | P2 | P4 | P5 | P6 | P7 | P8 |
|---|---|---|---|---|---|---|
| (i) | n-hexyl | $^{t}$BuPhTh | PhTh | H | n-hexyl | OH |
| (ii) | n-hexyl | BuPhTh | PhTh | H | n-butyl | OH |
| (iii) | $G^1$ | PhTh | PhTh | H | $G^1$ | OH |
| (iv) | n-hexyl | PhTh | PhTh | H | n-hexyl | OH |
| (v) | $G^2$ | PhTh | $NO_2$ | H | $G^2$ | OH |
| (vi) | $G^2$ | PhTh | $NH_2$ | H | $G^2$ | OH |
| (vii) | $G^2$ | PhTh | OH | $G^2$ | H | $NH_2$ |
| (viii) | $G^2$ | PhTh | OH | $G^2$ | H | PhTh |

In Table T
PhTh = phenylthio
BuPhTh = 4-(t-butyl)phenylthio
$G^1$ = 4,4,4-trimethyl-2-methylbutyl
$G^2$ = 5,5,5-trimethyl-3-methylpentyl

One useful indication of the ability of a dye to give good contrast is the product of the molar extinction coefficient and the solubility (in moles/litre). Solutions of dyes in liquid crystal compositions for use in electronic display applications should have a value for this product which is preferably at least 500 $cm^{-1}$ and more preferably at least 750 $cm^{-1}$. As the molar extinction coefficient for a dye does not vary significantly from one liquid crystal material to another, the preferred value of the product can be used to calculate the preferred minimum solubility of a particular dye in any liquid crystal material in order to give good contrast. Thus for a dye having a molar extinction coefficient of 11000 $cm^2.moles^{-1}$ the solubility should preferably be at least $4.5 \times 10^{-2}$ moles/litre and more preferably at least $6.8 \times 10^{-2}$ moles/litre. For a dye having a molar extinction coefficient of 16000 $cm^2.moles^{-1}$ the solubility should preferably be at least $3.1 \times 10^{-2}$ moles/litre and more preferably at least $4.6 \times 10^{-2}$ moles/litre. For a dye having a molar extinction coefficient 20000 $cm^2.moles^{-1}$ the solubility is preferably at least $2.5 \times 10^{-2}$ moles/litre and more preferably at least $3.8 \times 10^{-2}$ moles/litre.

Dyes prepared for use in liquid crystal displays should preferably be as pure as possible in terms of their freedom from inorganic and other ionisable materials which can interfere with the operation of the display or products which are radiation sensitive and decompose within the display during operation. The dyes should also preferably be free from non- or inferior pleochroic materials, such as starting materials, intermediates and by-products, which do not contribute to the perceived contrast of the display. To obtain the dyes in a pure form, i.e. substantially free from interfering or deleterious matter, it is generally desirable to submit them to repeated recrystallisations from organics solvents, such as chloroform, and/or chromatographic separation procedures.

Where the material according to the first aspect is for use as in an electro-optical display the addition of the dye to the liquid crystal material raises the viscosity of the latter and thus tends to increase the response time of the display. It is therefore desirable to use as little dye as possible (but sufficient to give an adequate electro-optical contrast). In this respect the dyes of Formula I are of particular value because many of them have very high extinction coefficients and thus only small quantities, generally less 7% by weight, are required in the liquid crystal material.

Although a guest-host device may require significantly less than 7% by weight of each dye compound incorporated in the liquid crystal material to operate at room temperature (20°C) solubilities of dyes in liquid crystal materials diminish as the temperature falls and in order to obtain a reasonable solubility at

lower temperatures the solubility at room temperature of each dye compound used may need to be ~7% by weight or even higher, e.g. up to 10% by weight.

The dyes of Formula I show adequate order parameter and solubility in a variety of liquid crystal host materials, including materials of both positive and negative dielectric anisotropy.

The minimum amount of each dye compound incorporated in a liquid crystal host material is 0.5% preferably 1% by weight.

Particularly suitable liquid crystal host materials include:

a. mixtures incorporating cyanobiphenyls preferably together with a few per cent of one or more compounds having a clearing point (liquid crystal to isotropic liquid transition) above 150°C (eg a cyano-p-terphenyl) such as the materials E7 and E43 marketed by BDH Chemicals Ltd, of Broom Road, Poole, Dorset, England: (compositions given below);

b. mixtures incorporating cyanophenyl cyclohexane (PCH) compounds preferably together also with a few per cent of one or more high clearing point compounds such as a cyanobiphenyl cyclohexane compound, eg the material ZLI 1132;

c. mixtures incorporating at least one cyanobiphenyl and at least one cyanophenylpyrimidine compound, preferably together also with a few per cent of a high clearing point compound, eg a cyano-phenylpyrimidinephenyl compound, eg the material RO TN 30;

d. mixtures incorporating esters, eg containing bicyclo(2,2,2) octane and benzene rings (which may contain fluorine substituents).

It has been found that particularly suitable host liquid crystal materials are those which contain a mixture including roughly equal proportions by weight of 4-n-alkyl- or alkoxy-4-cyanobiphenyls and 1-(4'-cyanophenyl)-4-n-alkylcyclohexanes together forming between about 60 and 80% by weight of the mixture together with one or more materials of high clearing point (nematic-to-isotropic liquid transition temperature greater than 100°C).

Any other liquid crystal material incorporating one or more compounds selected from the following known families may in fact be used in the host material:

i 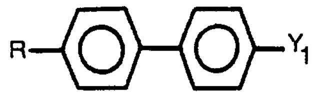

ii 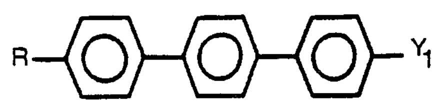

iii 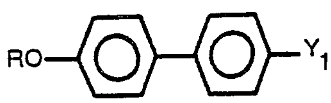

iv 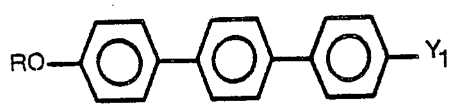

v 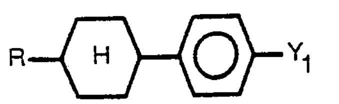

vi 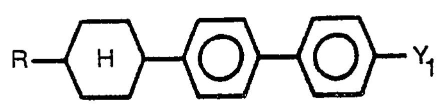

vii 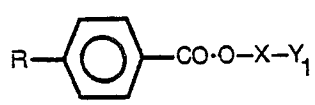

viii 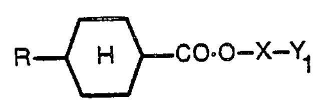

ix 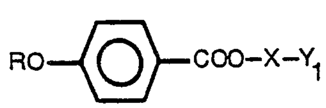

x 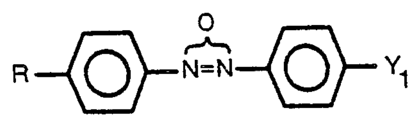

xi 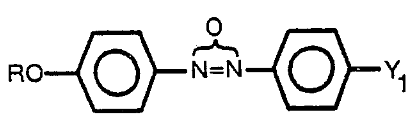

xii 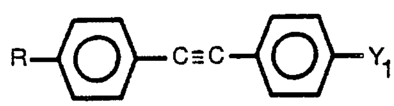

xiii 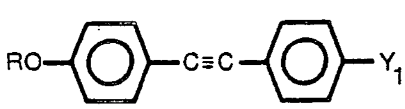

xiv 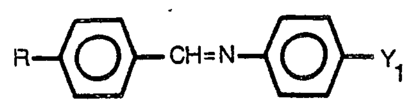

xv 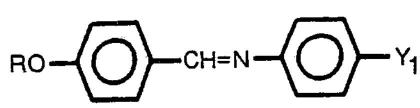

xvi 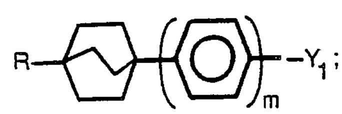 ; m = 1,2

xvii 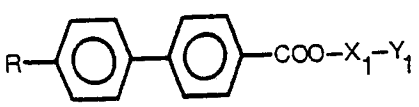

xviii 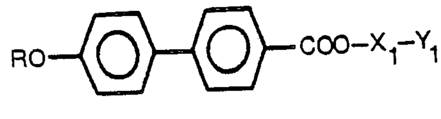

xix 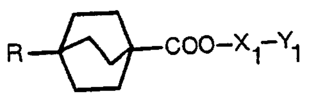

xx 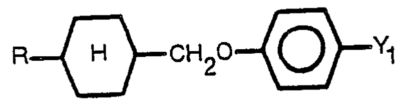

xxi 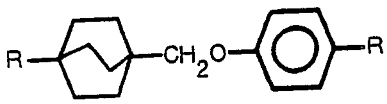

xxii 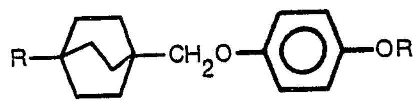

xxiii 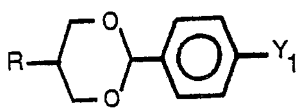

xxiv 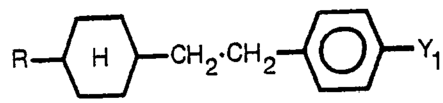

where

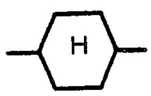

is a trans, 1,4 substituted cyclohexane ring,

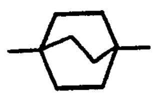

is a 1,4 substituted bicyclo(2.2.2)octane ring, $X_1$ is a 1,4 phenylene group

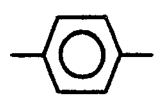 ,

or a 4,4′ biphenylyl group.

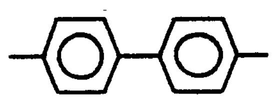

or a 2,6 naphthyl group

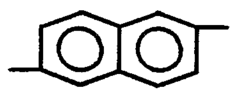 ;

and $Y_1$ is CN, or $R^1$, or $OR^1$ or CO.O—$X_1$—$Y^1$ where $Y^1$ is CN, or $R^1$ or $OR^1$; the definition of $R^1$ being the same as that of R.

Solutions of dye and liquid crystal material may be made in a conventional way simply by mixing the dye and the liquid crystal material together and then heating the mixture at about 80°C with stirring for about 10 minutes and then allowing the mixture to cool.

Pleochroic dye compounds of Formula I may be mixed together with other pleochroic dye compounds (which may or may not be of Formula I) to extend their spectral absorption properties when dissolved in liquid crystal material. For example, where a dye compound of Formula I is blue or blue/green it may be mixed with yellow and red dye compounds or yellow, red and orange dye compounds to produce a neutral 'black' mixture.

The relative proportions of the dyes mixed together are determined by the desired spectral response. This is an absorption curve extending across the spectrum to give a grey colouration. The dye mixture is then used with liquid crystal material as above or as follows.

According to the present invention in a second aspect a liquid crystal electro-optical display includes two electrically insulating substrates at least one of which is optically transparent, electrodes on the inner surfaces of the substrates and a film of dielectric material contained between the substrates, wherein the dielectric material is material according to the first aspect of the invention as defined above.

The liquid crystal/dye solution which is the material according to the first aspect of the invention may be used in any known electro-optical display as defined in the second aspect. Examples, which will be familiar to those skilled in the liquid crystal art, are the known devices operating by the following effects:

a. The Twisted Nematic Effect

In this case a film of nematic liquid crystal material of positive dielectric anisotropy has an off state in which (the long axes of) its molecules lie in the plane of the device substrate inner surfaces (which are normally parallel to one another), or at a small angle thereto, and undergo roughly a π/2 helical twist in orientation from one substrate to the other by virtue of the orientations at the surfaces caused by treatment, eg unidirectional rubbing, of those surfaces prior to assembly. This is the twisted "homogeneous texture". Application of an electric field between the electrodes on the respective substrate inner surfaces to give the on state causes re-arrangement of the liquid crystal molecules to lie (with their long axes) effectively perpendicular to the substrate inner surfaces in the "homeotropic texture". A change in optical activity (rotary power) of the film occurs between the on and off states by virtue of the molecular re-arrangement and the optical effect observed can be enhanced by the use of a linear polariser adjacent to one of the substrates and pleochroic dye dissolved in the liquid crystal material. The polariser has its polarisation axis parallel to the direction of the liquid crystal molecules at the adjacent substrate inner surface (or, more strictly, parallel to the average axis of projection of the molecules on that surface). By the guest-host effect the dye causes the off state to appear relatively dark or strongly colour whereas the on state appears clear or weakly coloured.

b. The Fréedericksz Effect in Negative Nematics

In this case a film of nematic liquid crystal material of negative dielectric anisotropy has an off state in which its molecules lie perpendicular (ie in the homeotropic texture) to the substrate inner surfaces (which are parallel) by virtue of surface treatments to these inner surfaces prior to assembly. A single polariser is placed adjacent to one substrate with its transmission axis perpendicular to the normal to the inner surfaces. Application of an electric field between the electrodes on the respective substrate inner surfaces to give the on state causes re-arrangement of the liquid crystal molecules to lie parallel to the substrate inner surfaces (ie in the homogeneous texture). Incorporation of pleochroic dye in the liquid crystal material ensures that the off state appears relatively clear or weakly coloured whereas the on state appears dark or strongly coloured. The effect observed is enhanced by the presence of the polariser.

c. The Fréedericksz Effect in Positive Nematics

In this case a nematic liquid crystal material of positive dielectric anisotropy has an off state in which the molecules lie roughly parallel and in the plane of the substrate inner surfaces (which are parallel) by virtue of treatment of those surfaces prior to assembly (ie the homogeneous texture). A single polariser is placed adjacent to one substrate with its transmission axis parallel to the substrate inner surfaces.

Application of an electric field between the electrodes on the respective substrate inner surfaces to give the on state causes re-arrangement of the liquid crystal molecules to lie perpendicular to the substrate inner surfaces, ie the homeotropic texture. Incorporation of pleochroic dye in the liquid crystal material ensures that the off state appears relatively dark or strongly coloured whereas the on state appears colourless or weakly coloured as in the twisted nematic effect above. The effect observed is enhanced by the presence of the polariser.

d. The Phase Change Effect (Negative Contrast Type)

In this case a cholesteric liquid crystal material of positive dielectric anisotropy and long molecular helical pitch, typically 2 μm, has an off state in which its molecules lie in random helices, ie the "focal conic texture". Application of an electric field between the electrodes on the respective substrate inner surfaces to give the on state causes re-arrangement of the liquid crystal molecules to lie perpendicular to the substrate inner surfaces (ie the homeotropic texture as for positive nematics in the Fréedericksz effect). Incorporation of pleochroic dye in the liquid crystal material gives an off state which appears relatively dark or strongly coloured and an on state which appears colourless or weakly coloured.

e. The Phase Change Effect (Positive Contrast Type)

In this case a cholesteric liquid crystal material of negative dielectric anisotropy and long molecular helical pitch has an off state in which its molecules lie perpendicular to the substrate inner surfaces, ie in the homeotropic texture. Application of an electric field between electrodes on the respective substrate inner surfaces causes re-orientation of the molecules to lie in the plane of the substrate inner surfaces in a helical arrangement ie the twisted homogeneous texture. Incorporation of pleochroic dye in the liquid crystal material gives an off state which is relatively colourless or weakly coloured and an on state which is relatively dark or strongly coloured.

f. The Fréedericksz Effect in Smectics

In this case a smectic A liquid crystal material of positive dielectric anisotropy having a dielectric relaxation frequency fc less than about 10 kHz (ie the material has a negative dielectric anisotropy above this frequency) has an off state in which its molecules lie roughly parallel to the substrate inner surfaces with the molecules at the two inner surfaces parallel as in the Fréedericksz effect (c). Application of an electric field with a frequency less than fc to give the on state causes re-orientation of the liquid crystal molecules to lie perpendicular to the substrate inner surfaces, is in the homeotropic texture. The on state is

preserved when the field is removed. Clearing of the on state may be achieved by the application of a high frequency electric field, ie with a frequency >fc. A single polariser is used, as with the Fréedericksz effect (c) above, when the molecular alignment at the two substrate inner surfaces in the off state is parallel. Incorporation of pleochroic dye in the liquid crystal material gives an off state which is relatively dark or strongly coloured and an on state which is clear or weakly coloured.

Of the above effects the phase change effect (negative contrast type) is preferred.

Use of the material defined in the first aspect of the invention above is not limited to electro-optical displays (as defined in the second aspect). The material may, in fact, be used in any known application of a dyed liquid crystal material. An example of such a 'non electro-optical' application is a thermally addressed display in which a symbol or character is provided in a smectic or cholesteric material by selective heating of the material eg by a laser (eg He/Ne) beam, to produce a localised change in the molecular texture of the material. The dye enhances the contrast between the different regions of the display, ie between those which are selectively heated and those which are not heated.

The dyes of Formula I may be prepared by the substitution of at least one of the nitro groups in a compound of the formula:

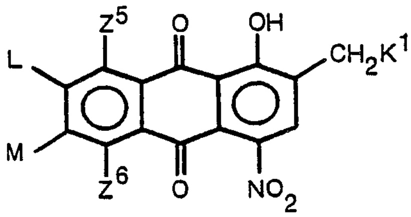

Formula IV

wherein: one of $Z^5$ and $Z^6$ is OH, the other is $NO_2$ and the groups $K^1$, L and M are as in Formula II with at least one substituted thio group, $—SR^2$ and/or $—SR^3$ and, where only a single nitro group is replaced, optionally followed by the reduction of the other nitro group to an amino group. This amino group may then be alkylated in a conventional manner.

A process for the preparation of the preferred dyes of Formula II has two stages, the first comprising the reaction of a mercaptan, $R^1SH$, with the compound of Formula IV in pyridine at a temperature around or below 30°C, to give an intermediate compound of the formula:

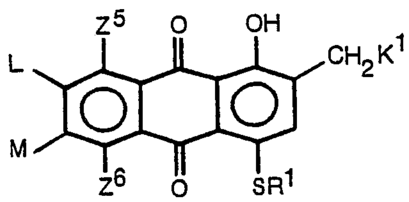

Formula V

wherein: $K^1$, L and M and $R^1$ are as in Formula II and $Z^5$ and $Z^6$ are as in formula III; and the second stage comprising the reaction of the intermediate compound of Formula V with a second mercaptan, $R^2SH$, at a higher temperature. The second stage, the reaction with the second mercaptan, is preferably performed in a polar solvent, more preferably a hydroxylic solvent such as an alkanol, eg isopropanol, and is also preferably performed at the reflux temperature of the solvent.

The starting material for this process may be prepared by the reaction of quinizarin or anthrarufin with one or more appropriate aldehydes in the presence of pyridine to give a 2,7-dialkylquinizarin or a 2,6-dialkylanthrarufin and nitrating this to give a 2,7-dialkyl-4,5-dinitroquinizarin or a 2,6-dialkyl-4,8-dinitroanthrarufin of Formula III.

The intermediate compounds of Formula IV and the reduction products thereof, wherein the $NO_2$ group is converted into an NHT group, also fall within the scope of Formula I and form another preferred feature of the present invention some of these dyes have particularly good solubilities and/or order parameters in liquid crystal materials.

The reduction products derived from the compounds of Formula IV wherein $Z^5$ or $Z^6$ is $NO_2$ may be prepared from the compounds of Formula IV by reduction of the $NO_2$ group with a mixture of sodium sulphide and sulphur in an aqueous medium, optionally followed by alkylation, eg methylation of the $NH_2$ group.

Preferred compounds within this class are those of Formula VI and VII as follows:

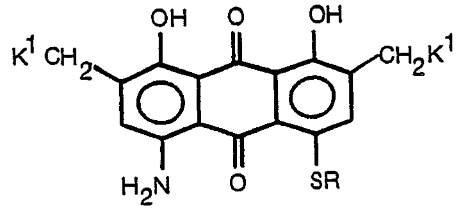

Formula VI

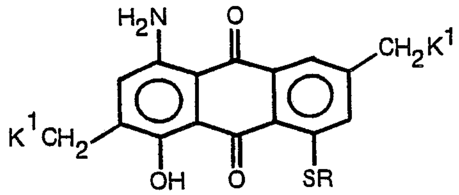

Formula VII

Examples of such compounds are 1,8-dihydroxy-2,7-di(3,5,5,5-tetramethyl-n-pentyl)-4-phenylthio-5-aminoanthraquinone, 1,5-dithydroxy-4-phenylthio-8-amino-2,6-di(3,5,5,5-tetramethyl-n-pentyl)anthraquinone and 1,5-dithydroxy-4-phenylthio-8-nitro 2,6-di(2,4,4-trimethyl-n-butyl)anthraquinone.

Examples for the preparation and properties of compounds of Formula I will now be given, in which all parts and percentages are by weight unless otherwise indicated and the letters "AQ" are used to represent anthraquinone.

Example 1

(a) Preparation of 1,5-dihydroxy-2,6-dinonyl-4-phenylthio-8-nitroanthraquinone

A mixture of 1.1 ml (0.01 moles) of thiophenol and 5.8 g of 1,5-dihydroxy-2,6-dinonyl-4,8-dinitro-AQ (0.01 moles) in 50 ml pyridine was stirred for 30 minutes at room temperature and then drowned out into 100 ml water. Concentrated HCl (75 ml) was added and the precipitated solid was filtered, washed with water and dried to yield 6 g of crude material. A portion of this (3 g) was recrystallised from 100—120 petroleum ether to yield 1.3 g of the intermediate 1,5-dihydroxy-2,6-dinonyl-4-phenylthio-8-nitro-AQ (structure confirmed by mass spectrometry).

(b) Preparation of 1,5-dihydroxy-2,6-dinonyl-4-phenylthio-8-(t-butylphenylthio)anthraquinone

A mixture of 0.65 g of the above intermediate and 0.2 g of 4-t-butylphenylthiol in 10 ml pyridine was stirred at 90—5°C for 16 hours and then drowned out into 50 ml of dilute HCl. The precipitated solid was filtered, washed successively with water and methanol and dried. It was then recrystallised from 40—60 petroleum ether to yield 0.1 g of product consisting mainly of 1,5-dihydroxy-2,6-dinonyl-4(4-t-butylphenylthio)-8-phenylthio-AQ (structure confirmed by mass spectrometry).

(c) Preparation of 1,5-dihydroxy-2,6-dinonyl-4-phenylthio-8-aminoanthraquinone

A solution of 10 g of $Na_2S.9H_2O$ and 2 g of sulphur in 20 ml of water was added to 3.0 g of the product of Example 23(a) in 100 ml of water and 50 ml of pyridine and heated to 90°C. After 1 hour at 90°C the pyridine was evaporated and the remainder cooled to 60°C. The oil which separated was extracted into 100—120 petroleum ether and the water removed (by Dean & Stark). The solution was purified by passage through a silica gel column and a small quantity of HCl added to precipitate a solid. The solid (1.2 g) was dried at 70°C and the structure confirmed by mass spectral and NMR analysis.

(d) Preparation of 1,5-dihydroxy-2,6-dinonyl-4,8-diphenylthio-AQ

The procedure of Example 1(b) was repeated using the equivalent amount of thiophenol in place of the 4-t-butylphenylthiol.

Example 2

(a) Preparation of 1,8-dihydroxy-2,6-dinonyl-4-phenylthio-5-nitro-AQ

The procedure of Example 1(a) was repeated using 5.8 g of 1,8-dihydroxy-2,7-dinonyl-4,8-dinitro-AQ (0.01 moles) in place of the 5.8 g of 1,5-dihydroxy-2,6-dinonyl-4,8-dinitro-AQ.

(b) Preparation of 1,8-dihydroxy-2,7-dinonyl-4-phenylthio-5-amino-AQ

The procedure of Example 1(c) was repeated using 3.0 g of 1,8-dihydroxy-2,6-dinonyl-4-phenylthio-5-nitro-AQ from Example 2(a) in place of the product of Example 1(c).

(c) Preparation of 1,8-dihydroxy-2,7-dinonyl-4,5-diphenylthio-AQ

The procedure of Example 1(d) was repeated using the equivalent amount of 1,8-dihydroxy-2,7-dinonyl-4-phenylthio-5-nitro-AQ in place of the 1,5-dihydroxy-2,6-dinonyl-4-phenylthio-8-nitro-AQ.

The 1,5-dihydroxy-2,6-dinonyl-4,8-dinitro-AQ and the 1,8-dihydroxy-2,7-dinonyl-4,5-dinitro-AQ were made according to the method described in UK Patent Specification No. 2038809A by reacting 1,5-dihydroxy-AQ and 1,8-dihydroxy-AQ, respectively, with nonanal and nitrating the di-nonyl derivatives. The alkyl radical in the nonanal used in Examples 1 and 2 had the formula:

$$—CH_2.CH_2.CH(CH_3).CH_2.CH(CH_3)_3$$

Example 3

(a) Preparation of 1,8-dihydroxy-2,7-didocyl-4-phenylthio-5-nitroanthraquinone

A mixture of 6.6 g of 1,8-dihydroxy-2,7-didodecyl-4,5-dinitro-AQ, 1.1 g of thiophenol and 100 ml

pyridine were stirred mixed at ambient temperature for 2 hours and then drowned out into 200 ml water. The precipitated solid was filtered, washed successively with water and methanol and dried to yield 4.5 g of crude material. After recrystallisation from 100—120 petroleum ether the product was 1,8-dihydroxy-2,7-didodecyl-4-phenylthio-5-nitro-AQ (4.15 g: structure confirmed by mass spectrometry).

(b) Preparation of 1,8-dihydroxy-2,7-didocyl-4-phenylthio 5-(4-t-butylphenylthio)anthraquinone

A portion of this intermediate (3.7 g) was added to a solution of 0.83 g of 4-t-butylphenylthiol and 0.3 g KOH in 50 ml iso-propanol at 65°C. After heating the mixture at the reflux (83°C) for 3 hours it was cooled to ambient temperature, filtered, washed successively with isopropanol and methanol, dried and recrystallised from 100—120 petroleum ether. The product (2.75 g) was essentially 1,8-dihydroxy-2,7-didodecyl-4-phenylthio-5-(4-t-butylphenylthio)AQ.

The 1,8-dihydroxy-2,7-didodecyl-4,5-dinitro-AQ was made according to the method described in UK Patent Specification No. 2038809A by reacting 1,8-dihydroxy-AQ with n-dodecanal and nitrating the di-n-dodecyl derivative.

Example 4

(a) Preparation of 2,7-Di-n-pentylchrysazin

Chrysazin (120 g) was stirred into a solution of 120 g of sodium hydroxide in a mixture of water (1500 ml) and pyridine (220 ml) at 55°C. Sodium hydrosulphite (200 g) was added to the mixture which was stirred under $N_2$ for 30 minutes before addition of a further 100 g of sodium hydrosulphite. The reaction mixture was heated to 80°C, over 30 minutes during which period was added, dropwise, n-pentanal (142 g) and the mixture stirred for 2 hours at 80°C still under $N_2$. It was then cooled to room temperature, poured into an acidified ice/water mixture (ice/water: 4 litres and 35% HCl: 700 ml), in which it was stirred for 2 hours, filtered and the filter cake washed with water. The tarry cake was slurried in 400 ml of ethyl acetate, filtered, washed with methanol and pulled until damp-dry. This paste was recrystallised from ethyl acetate to give 83 g of dry product (yield 45%) melting at 127°C. Elemental analysis gave C = 76.1% (75.8%) and H = 7.5% (7.4%).

(b) Preparation of 2,7-Di-n-pentyl-4,5-dinitrochrysazin

2,7-Dipentylchrysazin (56 g) from Example 4(a) was stirred in 800 ml of 98% sulphuric acid at room temperature for 30 minutes and then cooled to 0°C. To the cooled mixture was added, dropwise over a period of 30 minutes while maintaining the temperature <10°C, 160 ml of an anhydrous nitration acid, comprising 33% nitric acid and 67% sulphuric acid, and the mixture stirred for 2 hours at <10°C. The mixture was then poured into 4 litres of ice/water, stirred at room temperature for 30 minutes, filtered, washed acid-free and dried to give 50.5 g (yield 73%) of dry product melting at 140°C. Elemental analysis gave C = 58.8% (61.3%), H = 5.4% (5.5%) and N = 5.5% (6.0%).

(c) Preparation of 2,7-Di-n-pentyl-4-phenylthio-5-nitrochrysazin

To a mixture of 9.4 g of 2,7-di-n-pentyl-4,5-dinitro-chrysazin from Example 4(b) in 200 ml of pyridine at 20°C there was added a solution of 2.2 ml of thiophenol in 50 ml of pyridine. The colour of the mixture gradually changed from orange-brown to red and after 2 hours at 20°C was drowned into water, filtered, washed successively with water and methanol and dried to yield 9.5 g of product (88% theory). The structure was confirmed by mass spectrometry and elemental analysis, C = 67.5 (67.5) H = 5.8 (5.8) S = 6.7 (6.0) and N = 3.0 (2.7). This product had a molar extinction coefficient of 12,541 at 540 nm in chloroform.

(d) Preparation of 2,7-di-n-pentyl-4-phenylthio-5-(4-t-butylphenylthio)chrysazin

To a mixture of 1.7 ml of 4-t-butylphenylmercaptan and 0.4 g of KOH in 50 ml of isopropanol at 60°C was added 3.7 g of the product of Example 4(c) and the temperature raised to 80°C for 1.5 hour. It was then cooled to room temperature, filtered, washed successively with isopropanol and methanol and dried to give 3.5 g of product. After recrystallisation from petroleum ether, the structure was confirmed by mass spectrometry and elemental analysis, C = 73.0 (73.6) H = 6.5 (6.8) S = 9.1 (9.8). This product had a molar extinction coefficient of 19,183 at 592 nm in chloroform.

(e) Preparation of 2,7-di-n-pentyl-4,5-diphenylthiochrysazin

The procedure of Example 4(d) was repeated using the equivalent amount of thiophenol in place of the 4-t-butylphenylmercaptan.

Example 5

(a) Preparation of 2,7-Di-n-heptyl-chrysazin

The process of Example 4(a) was repeated except for the replacement of the 142 g of n-pentanal with 171 g of n-heptanal. The quantity of dry product was 103 g (yield 47.6%) which melted at 116—118°C. Elemental analysis gave C = 76.1% (75.8%) and H = 7.5% (7.4%).

(b) Preparation of 2,7-Di-n-heptyl-4,5-dinitrochrysazin

The process of Example 4(b) was repeated using 87.2 g of 2,7-di-n-heptylchrysazin in place of the 56 g

of 2,7-di-n-pentylchrysazin and increasing the quantity of the other ingredients by 25%. The quantity of dry product was 50.5 g (yield 69.1%) melting at 140°C. Elemental analysis gave C = 58.8% (61.3%), H = 5.4% (5.5%) and N = 5.5% (6.0%).

(c) Preparation of 2,7-Di-n-heptyl-4-phenylthio-5-nitrochrysazin

The process of Example 4(c) was repeated using 9.6 g of 2,7-n-heptyl-4,5-dinitrochrsazin in place of the 9.4 g of 2,7-di-n-pentyl-4,5-dinitrochrysazin. The structure was confirmed by mass spectrometry. This product had a molar extinction coefficient of 12,095 at 540 nm in chloroform.

(d) Preparation of 2,7-Di-n-heptyl-4-phenylthio-5-(4-t-butylphenylthio)chrysazin

The process of Example 4(d) was repeated using 3.8 g of 2,7-di-n-heptyl-4-phenylthio-5-nitrochrysazin in place of the 3.7 g of 2,7-di-n-pentyl-4-phenylthio-5-nitrochrysazin. After recrystallisation from petroleum ether, the structure was confirmed by mass spectrometry. This product had a molar extinction coefficient of 19,650 at 592 nm in chloroform.

(e) Preparation of 2,7-Di-n-heptyl-4,5-diphenylthiochrysazin

The procedure of Example 5(d) was repeated using the equivalent amount of thiophenol in place of the 4-t-butylphenylthiol.

Example 6

A black mixture dye was made by mixing together 8 parts of 2,7-di-n-pentyl-4,5-diaminochrysazin (blue) which is the product of Example 1(c) of UK Patent GB 2118203.

15 parts of 2,7-di-n-heptyl-4-phenylthio-5-(4-t-butylphenylthio)chrysazin (violet), which is the product of Example 5(d) above and 20 parts of 1-phenylthio-5-(4-t-butylphenylthio)anthraquinone (yellow) which is the product of Example 11 in UK Patent Specification No. 2094822A.

Example 7

Another black mixture dye was prepared from the same dyes as the mixture of Example 6, by mixing 12 parts of the blue dye, 20 parts of the violet dye and 30 parts of the yellow dye.

Example 8

A black mixture was made by mixing together 10 parts of the blue dye used in Example 6, 10 parts of the violet dye used in Example 6, 20 parts of the yellow dye used in Example 6, 30 parts of 1,5-di(4-t-butylphenylthio)-4-phenylthioanthraquinone (orange) which is the product of Example 22 in UK Patent Specification No. 2094822A and 10 parts of the partially methylated derivative of the blue dye used in Example 6 above blue green), which is the product of Example 5(a) of UK Patent GB 2118203.

This black mixture exhibits an excellent flat absorbance of 0.8 in the liquid crystal material, E43 in a $12 \times 10^6$m cell, over the range 450 nm to 650 nm.

The compounds described in the Examples have the properties identified in Table I as solutions in the liquid crystal medium, E43, at 20°C, unless otherwise stated. E43 contains the compounds:

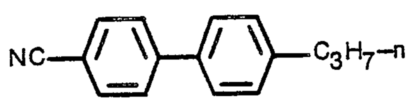

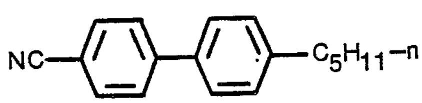

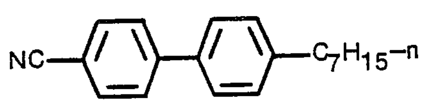

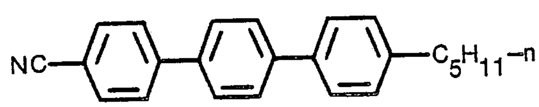

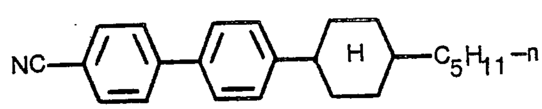

and is available from BDH Chemicals Limited of Broom Road, Poole, Dorset, England.

TABLE 1

| Example (Product) | Solubility (%) | λmax (nm) | Order Parameter |
|---|---|---|---|
| 1(a) | 2.8 | | 0.72 |
| 1(b) | 4.6 | 580/542 | 0.79 |
| 1(c) | 5.8 | 565/610 | 0.73 |
| 1(d) | 2.0 | 580/542 | 0.73 |
| 2(a) | 1.5 | | 0.77 |
| 2(b) | 6.2 | 565/610 | 0.74 |
| 2(c) | 3.0 | 580/542 | 0.72 |
| 3(b) | 3.6 | 580/542 | 0.83 |
| 4(c) | 0.5 | | 0.73 |
| 4(d) | 2.5 | 580/542 | 0.77 |
| 4(e) | 1.0 | 580/542 | 0.77 |
| 5(c) | 0.8 | | 0.73 |
| 5(d) | 7.2 | 580/542 | 0.78 |
| 5(e) | 1.8 | 580/542 | 0.78 |

Suitable black dye mixtures made from the dye compounds selected from the above compounds especially for use in the liquid crystal material E43 are as follows. When used in the material E43 the following stated parts by weight are the preferred percentages by weight of the compounds in the liquid crystal material.

Black dye Mixture 1

0.8 parts by weight of Dye A of formula:

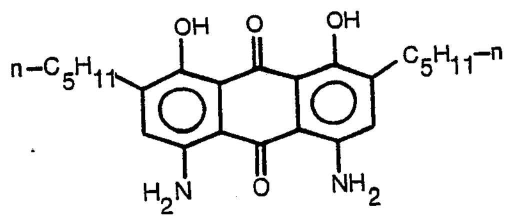

(blue)

1.5 parts by weight of Dye B of formula:

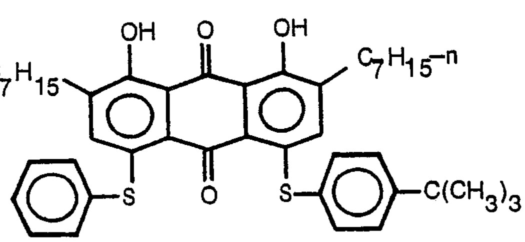

(red/purple)

2.0% parts by weight of Dye C of formula:

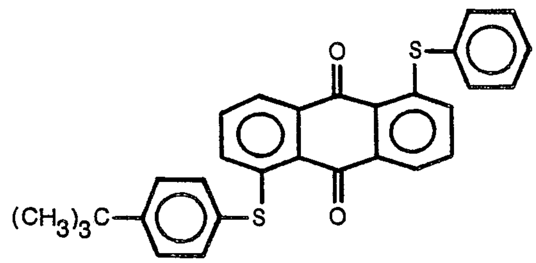

(yellow)

Black dye Mixture 2
- 1.2 parts of Dye A
- 3.0 parts of Dye C
- 2.0 parts of Dye B

Black dye Mixture 3
- 1% of Dye A as above
- 2% of Dye C as above
- 1% of Dye B as above

1% of Dye D of formula:

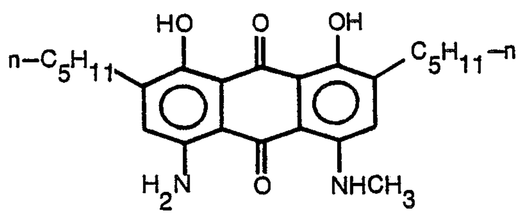

(blue/green)

3% of Dye E of formula:

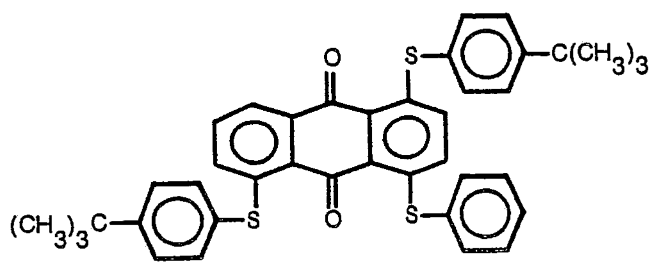

(orange)

Black dye Mixture 3 has been found to show an excellently flat absorbence of 0.8 in a 12 µm cell from 450 nm across the spectrum to 650 nm.

Examples of liquid crystal devices embodying the second aspect of the present invention will now be described with reference to the accompanying drawings in which:

Figure 1 is an exploded view of the Fréedericksz effect display device embodying the present invention,

Figure 2 is a sectional view of the device shown in Figure 1; and

Figure 3 is a front view of a watch having a liquid crystal display constructed as shown in Figures 1 and 2.

As shown in Figure 1 a liquid crystal display of the Fréedericksz effect (positive nematic) type includes a liquid crystal cell 3 comprising two glass slides 4, 5 containing a layer of liquid crystal material 6 which is basically a positive nematic material together with a pleochroic dye. Electrodes 7, 8 eg of tin oxide are arranged on the inner faces of the slides 4, 5. A brushed aluminium reflector 27 may be located behind the slide 5.

Prior to assembling the cell 3 the slides 4, 5 (already bearing the electrodes 7, 8) are coated on their inner faces with silicon monoxide or magnesium fluoride. This coating is formed by evaporating a stream of eg silicon monoxide onto the slide at an angle of about 5° to the surface as for example described in UK Patent Specification Number 1,454,296. On assembly the slides are arranged with the evaporation direction on the two slides 4, 5 parallel to one another. With such coatings applied liquid crystal molecules at the coated surfaces lie in a single direction (parallel to the evaporation direction) and at an angle of about 25° to 35° typically about 30° to the adjacent slide surfaces. As a result the liquid crystal molecules lie in a parallel homogeneous texture as indicated by arrow 13 (Figure 1). The dye molecules in guest-host relationship with the liquid crystal molecules are also roughly in this texture giving a relatively strong coloured

appearance to the cell 3 (which is black or grey if the dye absorbs uniformly throughout the visible spectrum.

A single polariser 1 placed in front of, or behind, the cell 3 (shown in front of Figure 1) with its transmission axis parallel to the alignment direction of the liquid crystal material 6, will enhance the colour of the display in this state, the "off" state. By this arrangement the electric vector of the incident or reflected light is confined roughly parallel to the transition of the dye molecules.

When a suitable voltage, eg a few volts, (greater than the threshold to give the effect) is applied between the electrodes 7 and 8, to give the "on" state, the molecules of the liquid crystal material are switched to the homotropic texture, ie to lie parallel to the electric field along an axis perpendicular to the slides 4, 5. The dye molecules are also switched to this texture by the guest-host effect and have their long axes essentially parallel (ie they are essentially "end-on") to light incident on the cell 3 in a direction perpendicular to the slides 4, 5, effectively reducing their absorption of ambient light. This gives the cell 3 a relatively clear or weakly coloured appearance.

If the electrodes 7 and 8 cover only part of the inner surface of the slides 4 and 5 respectively the entire cell 3 will appear strongly coloured (ie strongly reflects) in the "off" state whereas in the "on" state only the region of the liquid crystal material 6 between the electrodes 7, 8 will appear clear or weakly coloured in the "on" state the remainder of the cell 3 appearing strongly coloured, ie remaining in the "off" state. (If the pleochroic dye absorbs uniformly throughout the visible spectrum the strong colouration will appear black or grey.)

Thus, by shaping the electrodes 7, 8 into discrete facing parts, eg bars of a digit separately connectable to a voltage source (not shown), symbols or letters may be displayed. This may be achieved by photoetching (in a known way) the layers, eg $SnO_2$, used to form the electrodes 7, 8 prior to assembly.

For example, in the watch display of Figure 3 the electrodes 7, 8 are shaped to provide four seven bar numeric digits to display time; eg the digits are displaying 12.45 as shown in Figure 3. A pulsed period dot P is also included, as in conventional watch displays, to indicate operation of the display.

Examples of suitable dyed liquid crystal material for use as the material 6 above is the above mentioned Dye Mixture 1, 2 or 3 dissolved in the host E43 (the thickness of the material 6 layer being 12 μm).

In an alternative device embodying the second aspect of the present invention a cholesteric to nematic phase change effect device is made in a known way. The method of construction is the same as that described above with reference to Figures 1 to 3 except that no $MgF_2$ is SiO coating is applied to the inner surfaces of the electrode bearing slides 4, 5, no polariser 1 is required and the liquid crystal material 6 in this case is essentially a long pitch cholesteric material (having a molecular helical pitch of the order of about 2 μm containing a pleochroic dye). A suitable material is one of the host E43 containing Dye Mixture 1, 2 or 3 defined above (as used in the specific Fréedericksz effect device described with reference to Figures 1 to 3) (the thickness of the material 6 layer again being 12 μm).

In the "off" state (with no voltage applied) the cell 3 again appears strongly coloured in this case (as in the Fréedericksz effect device). The liquid crystal material 6 in this state is in the focal conic texture which comprises an arrangement of random molecular helices. The dye molecules take up the same arrangement by the guest-host effect. The strong colouration (which may be black or dark grey) is because ambient white light incident on the material 6 via the slide 4 is partially absorbed by the dye molecules which are perpendicular or oblique to the light propagation direction.

In the "on" state a voltage (typically 10—15 volts) is applied between the electrodes 7, 8 sufficient to give the homeotropic texture, ie with the liquid crystal molecules between the electrodes 7, 8 essentially re-orientated to lie perpendicular to the slides 4, 5. The dye molecules between the electrodes 7, 8 are re-orientated to this arrangement by the guest-host effect. The region between the electrodes 7, 8 appears clear or weakly coloured in this state (as with the Fréedericksz effect device) because the dye molecules are essentially "end-on" to ambient light propagating in a direction perpendicular to the cell 3, ie perpendicular to the slides 4, 5 (via the slide 4).

A suitable host in this case is either E43 specified above (96% by weight) plus CB 15 (4% by weight). Dye Mixture 1, 2 or 3 defined above may be used as the guest dye.

CB 15 is the compound

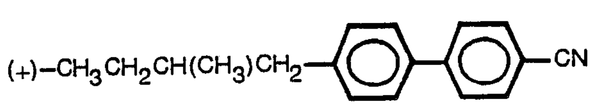 supplied by BDH Chemicals Ltd.

**Claims**

1. A material suitable for a guest-host liquid crystal device comprising a solution of a liquid crystal material and a pleochroic dye characterised in that the pleochroic dye comprises at least one anthraquinone compound free from water solubilizing and ionic substituents and having the formula:

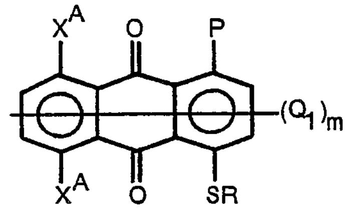

Formula I

wherein:

each group $Q_1$ is independently $C_1$ to $C_{20}$ alkyl;

P is OH or $NH_2$;

m is 1 or 2;

each group $X^A$ is independently selected from OH, $NO_2$, SR and $NZ_1Z_2$, provided that; either

one group $X^A$ is SR and the other group $X^A$ is OH, $NO_2$ or $NZ_1Z_2$ wherein each group R is independently selected from optionally substituted alkyl, aryl and cycloalkyl groups, and each group $Z_1$, $Z_2$ is independently selected from hydrogen, optionally substituted alkyl, aryl and cycloalkyl groups; or

one of the groups $X^A$ is $NZ_1Z_2$ wherein one of $Z_1$ or $Z_2$ is hydrogen and the other is hydrogen or alkyl, and the other group $X^A$ is OH;

and further provided that when m is 2 and at least one of the groups $X^A$ is SR or $NO_2$ and the groups $Q_1$ are identical they are each selected from $C_4$ to $C_7$ alkyl.

2. A material as claimed in claim 1 characterised in that each alkyl group $Q_1$ has from 4 to 15 carbon atoms inclusive.

3. A material as claimed in claim 2 characterised in that each alkyl group $Q_1$ has from 4 to 7 carbon atoms inclusive.

4. A material as claimed in any one of the preceding claims characterised in that the alkyl group $Q_1$ are n-alkyl groups.

5. A material as claimed in any one of the preceding claims characterised in that m is 2 and the two alkyl groups $Q_1$ are identical.

6. A material as claimed in any one of the preceding claims characterised in that each group R is aryl and contains up to 15 carbon atoms.

7. A material as claimed in claim 7 characterised in that the groups R are both optionally substituted phenyl groups.

8. A material as claimed in any one of the preceding claims characterised in that one or more of the groups $X^A$ is $NZ_1Z_2$ wherein one of $Z_1$ and $Z_2$ is H and the other H or $CH_3$.

9. A material according to any one of the preceding claims 1 to 7 characterised in that one of the groups $X^A$ is SR and the other group $X^A$ is OH, $NO_2$ or $NZ_1Z_2$.

10. A material as claimed in claim 9 characterised in that m = 2, P = OH one of the groups $X^A$ = OH and the other group $X^A$ = SR the alkyl groups $Q_1$ being adjacent to the OH groups.

11. A material suitable for a guest-host liquid crystal device comprising a solution of a liquid crystal material and a pheochroic dye characterised in that the pleochroic dye comprises at least one anthraquinone compound free from water solubilising and ionic substituents and having the formula:

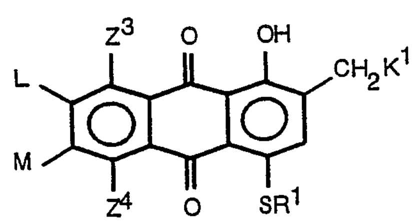

Formula II

wherein:

$Z^4$ is OH, $Z^3$ is NHT or $SR^2$, M is $CH_2K^2$ and L is H; or

$Z^3$ is OH, $Z^4$ is NHT or $SR^2$, L is $CH_2K^2$ and M is H;

$K^1$ and $K^2$ are independently $C_{1-20}$ alkyl;

$R^1$ is an aryl group having up to 15 carbon atoms;

$R^2$ is selected from alkyl groups having from 1 to 15 carbon atoms, aryl groups having from up to 15 carbon atoms and cycloalkyl groups having from 4 to 8 carbon atoms; T is H or alkyl provided that when one of the groups $Z^3$ or $Z^4$ is $SR^2$, and $CH_2K^1$ and L or M represent identical alkyl groups, these alkyl groups each contain from 4 to 7 carbon atoms.

12. A material according to claim 11 characterised in that the anthraquinone compound has a formula:

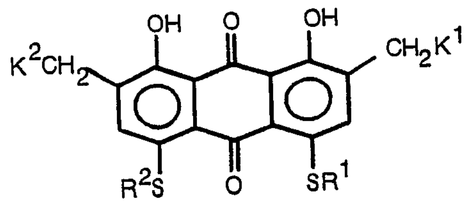

Formula III

wherein:

$K^2$ and $K^1$ are identical n-alkyl groups and have from 6 to 12 carbon atoms inclusive.

13. A material as claimed in claim 12 characterised in that of the two groups represented by $R^1$ and $R^2$, one is phenyl and the other is 4-alkylphenyl.

14. A material as claimed in claim 13 characterised in that the alkyl group contained in the 4-alkylphenyl group has a branched chain and from 3 to 8 carbon atoms inclusive.

15. A material as claimed in claim 13 characterised in that the alkyl group contained in the 4-alkylphenyl group is t-butyl.

16. A material as claimed in claim 1 characterised in that the anthraquinone compound is selected from:

1,8-dihydroxy-2,7-di-n-heptyl-4-phenylthio-5-(4-t-butylphenylthio)anthraquinone; 1,8-dihydroxy-2,7-di-n-pentyl-4-(t-butylphenylthio)-5-phenylthioanthraquinone; and

1,5-dihydroxy-2,6-di-(2,4,4-trimethyl-n-butyl)-4-phenylthio-8-(4-t-butylphenylthio)anthraquinone.

17. A material as claimed in claim 11 characterised in that the anthraquinone compound is selected from:

1,5-dihydroxy-2,6-dinonyl-4-phenylthio-8-amino-anthraquinone and

1,8-dihydroxy-2,7-dinonyl-4-phenylthio-5-amino-anthraquinone.

18. A material as claimed in any of the preceding claims characterised in that for each compound contained in the dye the product of molar extinction coefficient and the solubility of the compound in moles per litre is at least 500 $cm^{-1}$.

19. A material as claimed in any one of the preceding claims characterised in that the compound of Formula 1 contained in the pleochroic dye forms between 0.5 and 10 percent by weight of the material.

20. A material as claimed in claim 1 characterised in that the pleochroic dye comprises a mixture of dyes of different colours, at least one of which is a dye compound of Formula I as defined in claim 1.

21. A material as claimed in any one of the preceding claims characterised in that the liquid crystal material contains at least one 4-n-alkyl-or alkoxy-4'-cyanobiphenyl compounds.

22. A material as claimed in any one of claims 1 to 21 characterised in that the liquid crystal material contains at least 1-(4'-cyanophenyl)-4-n-alkyl-cyclohexane compound.

23. A liquid crystal electro-optical device including two electrically insulating substrates at least one of which is optically transparent, electrodes on the inner surfaces of the substrates and a film of dielectric material contained between the substrates, characterised in that the dielectric material is a dyed liquid crystal material as claimed in any one of the preceding claims.

24. A liquid crystal device as claimed in claim 24 characterised in that the device is a cholesteric to nematic phase change effect device.

25. A liquid crystal device as claimed in claim 23 characterised in that the device is a Fréedericksz effect device.

26. A liquid cystal device as claimed in claim 23 characterised in that the device is a twisted nematic effect device.

**Patentansprüche**

1. Material für eine Guest-Host-Flüssigkristallvorrichtung mit einer Lösung eines Flussigkristallmaterials und eines pleochroitischen Farbstoffs, dadurch gekennzeichnet, daß der pleochroitische Farbstoff mindestens ein Anthrachinon der Formel I, das keine in Wasser löslichmachende und ionische Substituenten aufweist, enthält:

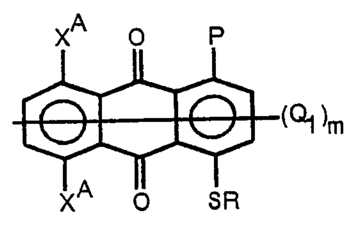

(I)

in der bedeuten:

jede Gruppe $Q_1$ unabhängig $C_{1-20}$-Alkyl,

P OH oder $NH_2$,

m 1 oder 2, jede Gruppe $X^A$ unabhängig OH, $NO_2$ SR oder $NZ_1Z_2$, mit der Maßgabe, daß entweder eine Gruppe $X^A$ SR und die andere Gruppe $X^A$ OH, $NO_2$ oder $NZ_1Z_2$ ist, wobei jede Gruppe R unabhängig ggf. substituiertes Alkyl, Aryl oder Cycloalkyl ist und jede Gruppe $Z_1$ und $Z_2$ unabhängig Wasserstoff, ggf. substituiertes Alkyl, Aryl oder Cycloalkyl ist, oder eine der Gruppen $X^A$ $NZ_1Z_2$ ist, wobei eine der Gruppen $Z_1$ oder $Z_2$ Wasserstoff und die andere Wasserstoff oder Alkyl ist, und die andere Gruppe $X^A$ OH ist, und außerdem wenn m 2 und mindestens eine der Gruppen $X^A$ SR oder $NO_2$ und die Gruppen $Q_1$ gleich sind, sie je unter $C_{4-7}$-Alkyl gewählt sind.

2. Material nach Anspruch 1, dadurch gekennzeichnet, daß jede Alkylgruppe $Q_1$ von 4 bis 15 Kohlenstoffatome hat.

3. Material nach Anspruch 2, dadurch gekennzeichnet, daß jede Alkylgruppe $Q_1$ von 4 bis 7 Kohlenstoffatome aufweist.

4. Material nach einem der vorstehenden Ansprüche, dadurch gekennzeichnet, daß die Alkylgruppen $Q_1$ n-Alkylgruppen sind.

5. Material nach einem der vorstehenden Ansprüche, dadurch gekennzeichnet, daß m 2 und die beiden Alkylgruppen $Q_1$ identische sind.

6. Material nach einem der vorstehenden Ansprüche, dadurch gekennzeichnet, daß jede Gruppe R aryl ist und bis zu 15 Kohlenstoffatome enthält.

7. Material nach Anspruch 7, dadurch gekennzeichnet, daß beide Gruppen R ggf. substituierte Phenylgruppen sind.

8. Material nach einem der vorstehenden Ansprüche, dadurch gekennzeichnet, daß eine oder mehrere der Gruppen $X^A$ $NZ_1Z_2$ ist, wobei eine der Gruppen $Z_1$ und $Z_2$ H und die andere H oder $CH_3$ ist.

9. Material nach einem der vorstehenden Ansprüche 1 bis 7, dadurch gekennzeichnet, daß eine der Gruppen $X^A$ SR und die andere Gruppe $X^A$ OH, $NO_2$ oder $NZ_1Z_2$ ist.

10. Material nach Anspruch 9, dadurch gekennzeichnet, daß $m = 2$, $P = OH$, eine der Gruppen $X^A = OH$ und die andere Gruppe $X^A = SR$ und die Alkylgruppen $Q_1$ zu den OH-Gruppen benachbart sind.

11. Material für eine Guest-Host-Flüssigkristallvorrichtung mit einer Lösung eines Flüssigkristallmaterials und eines pleochroitischen Farbstoffs, dadurch gekennzeichnet, daß der pleochroitische Farbstoff mindestens ein Anthrachinon der Formel II, das keine in Wasser löslichmachende und ionische Substituenten sufweist, enthält:

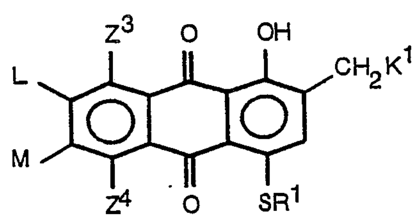

(II)

in der bedeuten:

$Z^4$ OH, $Z^3$ NHT oder $SR^2$, M $CH_2K^2$ und L H oder

$Z^3$ OH, $Z^4$ NHT oder $SR^2$, L $CH_2K^2$ und M H,

$K^1$ und $K^2$ unabhängig $C_{1-20}$-Alkyl,

$R^1$ Aryl mit bis zu 15 Kohlenstoffatomen,

$R^2$ Alkyl mit 1 bis 15 Kohlenstoffatomen, Aryl mit bis zu 15 Kohlenstoffatomen oder Cycloalkyl mit 4 bis 8 Kohlenstoffatomen,

T H oder Alkyl, mit der Maßgabe, daß wenn eine der Gruppen $Z^3$ oder $Z^4$ $SR^2$ ist und $CH_2K^1$ und L oder M gleiche Alkylgruppen sind, diese Alkylgruppen je 4 bis 7 Kohlenstoffatome enthalten.

12. Material nach Anspruch 11, gekennzeichnet durch ein Anthrachinon der Formel III:

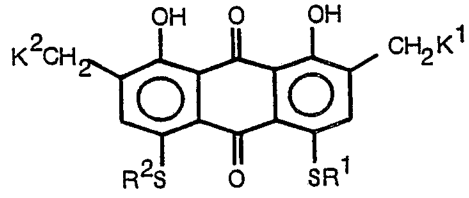

(III)

in der $K^2$ und $K^1$ gleiche n-Alkylgruppen mit 6 bis 12 Kohlenstoffatomen sind.

13. Material nach Anspruch 12, dadurch gekennzeichnet, daß von den beiden Gruppen $R^1$ und $R^2$ eine Phenyl und die andere 4-Alkylphenyl ist.

14. Material nach Anspruch 13, dadurch gekennzeichnet, daß die in der 4-Alkylphenylgruppe enthaltene Alkylgruppe eine verzweigte Kette und 3 bis 8 Kohlenstoffatome hat.

15. Material nach Anspruch 13, dadurch gekennzeichnet, daß die in der 4-Alkylphenylgruppe enthaltene Alkylgruppe t-Butyl ist.

16. Material nach Anspruch 1, gekennzeichnet durch eine Anthrachinon, ausgewählt unter:
1,8-Dihydroxy-2,7-di-n-heptyl-4-phenylthio-5-(4-t-butylphenylthio)-anthrachinon,
1,8-Dihydroxy-2,7-di-n-pentyl-4-(t-butylphenylthio)-5-phenylthioanthrachinon und
1,5-Dihydroxy-2,6-di-(2,4,4-trimethyl-n-butyl)-4-phenylthio-8-(4-t-butylphenylthio)-anthrachinon.

17. Material nach Anspruch 11, dadurch gekennzeichnet, daß das Anthrachinon unter
1,5-Dihydroxy-2,6-dinonyl-4-phenylthio-8-aminoanthrachinon und
1,8-Dihydroxy-2,7-dinonyl-4-phenylthio-5-aminoanthrachinon gewählt ist.

18. Material nach einem der vorstehenden Ansprüche, dadurch gekennzeichnet, daß für jede im Farbstoff enthaltene Verbindung das Produkt von molarem Extinktionskoeffizienten und Löslichkeit der Verbindung in mol/1 mindestens 500 $cm^{-1}$ ist.

19. Material nach einem der vorstehenden Ansprüche, dadurch gekennzeichnet, daß die im pleochroitischen Farbstoff enthaltene Verbindung der Formel I von 0,5 bis 10 Gew.-% des Materials ausmacht.

20. Material nach Anspruch 1, dadurch gekennzeichnet, daß der pleochroitische Parbstoff eine Gemisch von Farbstoffen verschiedener Farben enthält, woven mindestens einer eine Verbindung der Formel I gemäß Anspruch 1 ist.

21. Material nach einem der vorstehenden Ansprüche, dadurch gekennzeichnet, daß das Flüssigkristallmaterial mindestens eine 4-n-Alkyl- oder 4 Alkoxy-4'-cyanobiphenylverbindung ist.

22. Material nach einem der Ansprüche 1 bis 21, dadurch gekennzeichnet, daß das Flüssigkristallmaterial mindestens eine 1-(4'-Cyanophenyl)-4-n-alkylcyclohexanverbindung enthält.

23. Elektrooptische Flüssigkristallvorrichtung mit zwei elektrisch isolierenden Substraten, woven mindestens eines optisch durchsichtig ist, Elektroden auf den Innenflächen der Substrate und einem Film eines dielektrischen Materials zwischen den Substraten, dadurch gekennzeichnet, daß das dielektrische Material ein gefärbtes Flüssigkristallmaterial nach einem der vorstehenden Ansprüche ist.

24. Flüssigkristallvorrichtung nach Anspruch 23, dadurch gekennzeichnet, daß sie auf dem Phasenwechsel von cholosterinischer zu nematischer Phase beruht.

25. Flüssigkristallvorrichtung nach Anspruch 23, dadurch gekennzeichnet, daß sie auf dem Freedericksz-Effekt beruht.

26. Flüssigkristallvorrichtung nach Anspruch 23, dadurch gekennzeichnet, daß sie auf einem verdrillt nematischen Effekt beruht.

**Revendications**

1. Matière convenant pour un dispositif à cristaux liquides à effet matière invitée/matière hôte, comprenant une solution d'une matière à propriétés de cristaux liquides et d'un colorant pléochroïque, matière caractérisée en ce que le colorant pléochroïque comprend au moins un composé anthraquinonique dépourvu de substituants à rôle de solubilisation dans l'eau et de substituants ionique, ce composé répondant à la formule

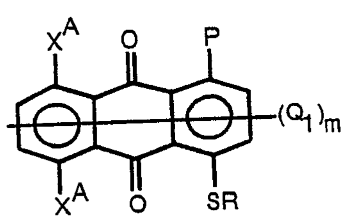

Formule I

dans lequelle
chaque groupe $Q_1$ représente, indépendamment, un groupe alkyle en $C_1$ à $C_{20}$;
P représente OH ou $NH_2$;
m vaut 1 ou 2;
chaque groupe $X^A$ est choisi, indépendamment, parmi OH, $NO_2$, SR et $NZ_1Z_2$, à la condition que:
ou bien un groupe $X^A$ représente SR et l'autre groupe $X^A$ représente OH, $NO_2$ ou $NZ_1Z_2$, où chaque groupe R est choisi, indépendamment, parmi des groupes alkyles, aryles et cycloalkyles éventuellement substitué, et chacun des groupes $Z_1$, $Z_2$ est choisi, indépendamment, parmi un atome d'hydrogène et des groupes alkyles, aryles et cycloalkyles éventuellement substitués;
ou bien l'un des groupes $X^A$ représente $NZ_1Z_2$, où l'un des $Z_1$ et $Z_2$ représente un atome d'hydrogène et l'autre représente un atome d'hydrogène ou un groupe alkyle, et l'autre groupe $X^A$ représente OH;
et, en outre, à la condition que, lorsque m vaut 2 et qu'au moins l'un des groupes $X^A$ représente SE ou $NO_2$ et que les groupes $Q_1$ sont indentiques, ils sont choisis chacun parmi un groupe alkyle ayant 4 à 7 atomes de carbone.

2. Matière telle que revendiquée à la revendication 1, caractérisée en ce que chaque groupe alkyle $Q_1$ comporte 4 à 15 atomes de carbone, inclusivement.

3. Matière telle que revendiquée à la revendication 2, caractérisée en ce que chaque groupe alkyle $Q_1$ comporte 4 à 7 atomes de carbone, inclusivement.

4. Matière telle que revendiquée dans l'une quelconque des revendications précédentes, caractérisée en ce que les groupes alkyles $Q_1$ sont des groupes n-alkyles.

5. Matière telle que revendiquée dans l'une quelconque des revendications précédentes, caractérisée en ce que m vaut 2 et les deux groupes alkyles $Q_1$ sont indentiques.

6. Matière telle que revendiquée dans l'une quelconque des revendications précédentes, caractérisée en ce que chaque groupe R est un groupe aryle et il contient jusqu'à 15 atomes de carbone.

7. Matière telle que revendiquée à la revendication 7, caractérisée en ce que les groupes R sont tous deux des groupes phényles éventuellement substitués.

8. Matière telle que revendiquée dans l'une quelconque des revendications précédentes, caractérisée en ce qu'un ou plusieurs des groupes $X^A$ est $NZ_1Z_2$, où l'un des symboles $Z_1$ et $Z_2$ représente H et l'autre représente H ou $CH_3$.

9. Matière selon l'une quelconque des revendications 1 à 7, précédentes, caractérisée en ce que l'un des groupes $X^A$ est SR et l'autre groupe $X^A$ représente OH, $NO_2$ ou $NZ_1Z_2$.

10. Matière telle que revendiquée à la revendication 9, caractérisée en ce que m vaut 2, P représente OH, l'un des groupes $X^A$ représente OH et l'autre groupe $X^A$ représente SR, les groupes alkyles $Q_1$ étant adjacents aux groupes OH.

11. Matière convenant pour un dispositif à cristaux liquides du type matière invitée/matière hôte, comprenant une solution d'une matière à propriétés de cristaux liquides et d'un colorant pléochroïque, matière caractérisée en ce que le colorant pléochroïque comprend au moins un composé anthraquinone, dépourvu de substituants à rôle de solubilisation dans l'eau et de substituants ioniques, ce composé répondante à la formule:

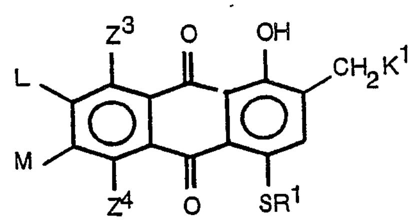

Formule II

dans laquelle

$Z^4$ représente OH, $Z^3$ représente NHT ou $SR^2$, M représente $CH_2K^2$ et L represente H;

ou bien $Z^3$ représente OH, $Z^4$ représente NHT ou $SR^2$, L représente $CH_2K^2$ et M représente H;

$K^1$ et $K^2$ représentent chacun, indépendamment, un groupe alkyle ayant 1 à 20 atomes de carbone;

$R^1$ est un groupe aryle ayant jusqu'à 15 atomes de carbone;

$R^2$ est choisi parmi les groupes alkyles ayant 1 à 15 atomes de carbone, des groupes aryles ayant jusqu'à 15 atomes de carbone et des groupes cycloalkyles ayant de 4 à 8 atomes de carbone; et T représente H ou un groupe alkyle, à la condition que, lorsqu'un des groupes $Z^3$ ou $Z^4$ est $SR^2$ et que $CH_2K^1$ et L ou M représentent des groupes alkyles identiques, ces groupes alkyles contiennent chacun de 4 à 7 atomes de carbone.

12. Matière selon la revendication 11, caractérisée en ce que le composé anthraquinonique répond à la formule:

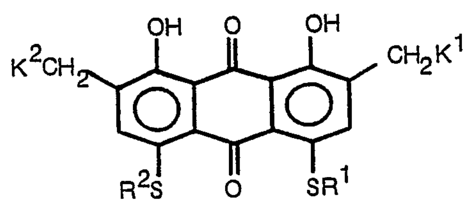

Formule III

dans laquelle $K^2$ et $K^1$ sont des groupes n-alkyles identiques et qui ont de 6 à 12 atomes de carbone, inclusivement.

13. Matière selon la revendication 12, caractérisée en ce que, des deux groupes représentés par $R^1$ et $R^2$, l'un est un groupe phényle et l'autre est un groupe 4-alkylphényle.

14. Matière selon la revendication 13, caractérisée en ce que le groupe alkyle contenu dans le groupe 4-alkylphényle comporte une chaîne ramifiée et a de 3 à 8 atomes de carbone, inclusivement.

15. Matière telle que revendiquée à la revendication 13, caractérisée en ce que le groupe alkyle contenu dans le groupe 4-alkylphényle est un groupe tertiobutyle.

16. Matière telle que revendiquée à la revendication 1, caractérisée en ce que le composé antraquinonique est choisi parmi

la 1,8-dihydroxy-2,7-di-n-heptyl-4-phénylthio-5-(4-t-butylphénylthio)anthraquinone; la 1-8-dihydroxy-2,7-di-n-pentyl-4(t-butylphénylthio)-5-phénylthioanthraquinone; et

la 1,5-dihydroxy-2,6-di-(2,4,4-triméthyl-n-butyl)-4-phénylthio-8-(4-t-butylphénylthio) anthraquinone.

17. Matière telle que revendiqué à la revendication 11, caractérisé en ce que le composé anthraquinonique est choisi parmi:

la 1,5-dihydroxy-2,6-dinonyl-4-phénylthio-8-aminoanthraquinone et

la 1,8-dihydroxy-2,7-dinonyl-4-phénylthio-5-aminoanthraquinone.

18. Matière telle que revendiquée dans l'une quelconque des revendications précédentes, caractérisée en ce que pour chaque composé contenu dans le colorant, le produit du coefficient d'extinction molaire et de la solubilité du composé, en moles par litre, est au moins égal à 500 $cm^{-1}$.

19. Matière telle que revendiquée dans l'une quelconque des revendications précédentes, caractérisée en ce que le composé de formule 1, contenu dans le colorant pléochroïque, forme entre 0,5 et 10% du poids de la matiére.

20. Matière telle que revendiquée à la revendication 1, caractérisée en ce que le colorant pléochroïque comprend un mélange de colorants de différentes couleurs, dont l'un au moins est un colorant de formule I selon la définition donnée à la revendication 1.

21. Matière telle que revendiquée dans l'une quelconque des revendications précédentes, caractérisée en ce que la matière à propriétés de cristaux liquides contient au moins un composé 4-n-alkyl- ou -alcoxy-4'-cyanobiphénylique.

22. Matière telle que revendiquée dans l'une quelconque des revendications 1 à 21, caractérisée en ce que la matière à propriété de cristaux liquides contient au moins un 1-(4'-cyanophényl)-4-n-alkyl-cyclohexane.

23. Dispositif électro-optique à cristaux liquides comprenant deux substrats électriquement isolants, dont l'un au moins est optiquement transparent, des électrodes sur les surfaces internes des substrats et une pellicule d'un matière diélectrique contenue entre les substrats, dispositif caractérisé en ce que la matière diélectrique est un matière à propriétés de cristaux liquides, colorée (contenant un colorant), telle que revendiquée dans l'une quelconque des revendications précédentes.

24. Dispositif à cristaux liquides tel que revendiqué à la revendication 23, caractérisée en ce que le dispositif est un dispositif à effet de variation de phase cholestérique à nématique.

25. Dispositif à cristaux liquides tel que revendiqué à la revendication 23, caractérisée en ce que le dispositif est un dispositif à effet Fréedericksz.

26. Dispositif à cristaux liquides tel que revendiqué à la revendication 23, caractérisée en ce que le dispositif est un dispositif à effet nématique torsadé.

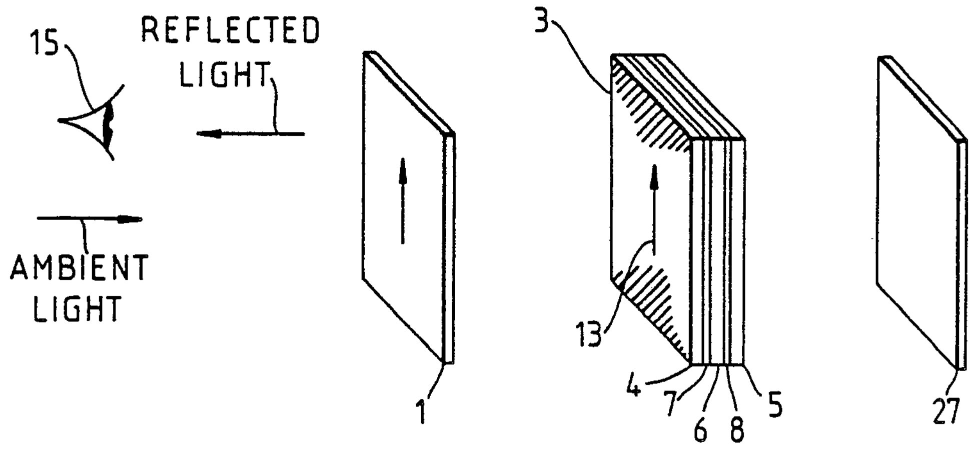


Fig.1.

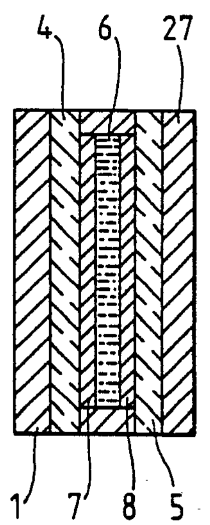


Fig.2.

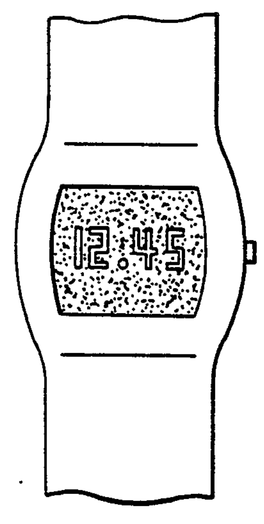


Fig.3.